(19) Europäisches Patentamt
European Patent Office
Office européen des brevets

(11) EP 0 623 764 B1

(12) EUROPEAN PATENT SPECIFICATION

(45) Date of publication and mention
of the grant of the patent:
29.10.1997 Bulletin 1997/44

(51) Int Cl.⁶: **F16F 9/10**, F16F 9/46,
F16F 9/34, F16F 1/02

(21) Application number: 94106890.0

(22) Date of filing: 03.05.1994

(54) **An adjustable viscous damper and isolator**

Ein regelbarer Dämpfer und Isolator

Un amortisseur et isolateur visqueux réglable

(84) Designated Contracting States:
DE FR GB IT

(30) Priority: 06.05.1993 US 58620

(43) Date of publication of application:
09.11.1994 Bulletin 1994/45

(73) Proprietor: HONEYWELL INC.
Minneapolis Minnesota 55408 (US)

(72) Inventors:
• Cunningham, David C.
Carefree, AZ 85377 (US)
• Duncan, Damon H.
Phoenix, AZ 85051 (US)
• Davis, Lawrence P.
Phoenix, AZ 85029 (US)

(74) Representative: Rentzsch, Heinz, Dipl.-Ing. et al
Honeywell Holding AG
Patent- und Lizenzabteilung
Postfach 10 08 65
63008 Offenbach (DE)

(56) References cited:
FR-A- 361 707          FR-A- 642 711
GB-A- 381 635          GB-A- 2 006 918
SU-A- 172 578          US-A- 3 176 800

• "An Advanced D-Strut" by L. Porter Davis et al.
Damping '91 Conf San Diego, California pp IAC-1
to IAC-17.
• "Development of the PACOSS D-STRUT" by D.C.
Cunningham et al Damping '91 Conference San
Diego, California pp IAA-1 to IAA-16

### Description

The present invention relates to the field of vibration damping and isolation and more particularly pertains to an adjustable viscous damping and isolation system.

Precision structural systems carrying a load, such as a telescopic system, are susceptible to disturbances that produce structural vibrations. Such vibrations may be contributed to the system by components or assemblies of the structural systems themselves, for example, reaction wheel assemblies used to point the telescopic system. Since such precision structures tend to have little inherent damping, these vibrations can lead to serious performance degradation. Therefore, an efficient means of damping and isolating the load carried by the precision structures in a controlled manner is of considerable importance.

Both active and passive damping isolation techniques have been utilized. However, active systems suffer from high cost, high complexity, high weight and high power. On the other hand, passive systems require no power, are far less expensive than active devices and are inherently stable. Thus, passive damping systems are proven to play a significant role in the overall design of precision structural systems.

One such manner of implementing a passive system includes the use of viscous damping and isolation. Viscous dampers and isolators include a fluid reservoir sealed in a damping structure which utilizes viscous fluid sheer forces to provide damping and isolation.

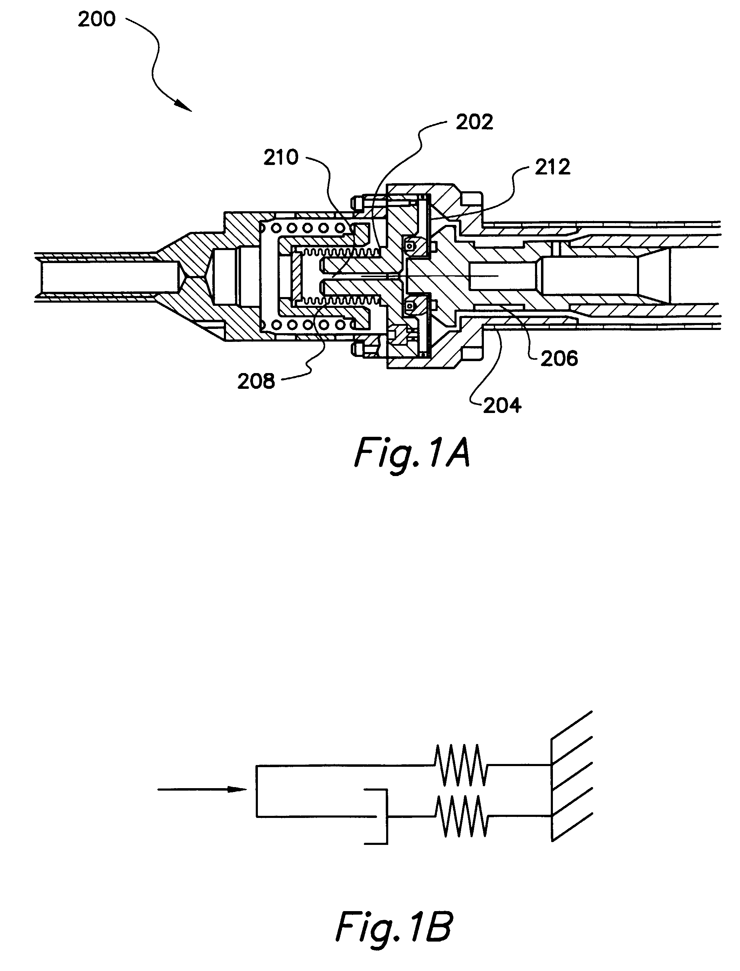

A viscous damping technique that offers high damping for truss structures, known as the D-Strut™, employs a small mechanical viscous damper configured in an inner-outer tube strut configuration as shown in Figure 1A. The D-Strut may serve as a basic element in a truss structure to isolate a load from disturbances. The PACOSS D-STRUT™, shown in Figure 1A, is further described in the article, "An Advanced D-Strut™," by L. Porter Davis and Steven D. Ginter, Honeywell Inc., Satellite Systems Operation, Damping '91 Conference, San Diego, California, and the article "Development of the PACOSS D-STRUT™, by David C. Cunningham, Honeywell Inc., Satellite Systems Operation, presented at the Damping '91 Conference, San Diego, California, 1991.

The D-Strut™ includes three basic elements: a small viscous damper 202, an inner tube 206 and an outer tube 204. The damper 202 is placed in series with the stiff inner tube 206 which is in turn placed in parallel with the compliant outer tube 204. An axial displacement across the strut produces a relative displacement between the inner and outer tubes which are connected together by the diaphragm 212. Deflection of the diaphragm 212 causes the fluid to be forced through a small diameter orifice 210, thereby causing a shearing in the fluid. The fluid shear is proportional to the displacement rate across the damper 202; thus, a true viscous damping force is obtained, i.e., a force proportional to the velocity. The damper element 202 consists of two compliant metal cavities connected by the small diameter orifice 210 of a certain length. The first cavity is formed by bellows 208 and the second cavity is formed by diaphragm 212; both cavities being hermetically sealed to avoid fluid loss.

The D-Strut™ provides for a very large dynamic range of damping with low temperature sensitivity. Visco-elastic materials have also been used for damping systems; however, such visco-elastic materials do not provide for such low temperature sensitivity.

Viscous damping and isolation apparatus such as described above, are used in truss type structures to add high structural damping. The frequency range over which damping can be added to a structure by the apparatus is proportional to the ratio of dynamic to static stiffness in the apparatus. Such a damping and isolation apparatus has a dynamic characteristic which is mechanically modeled by a first spring representative of a spring constant $K_A$ in parallel with a damper of damping constant $C_A$ which is in series with a second spring, representative of a second spring constant $K_B$, as shown in Figure 1B. The first spring provides the static stiffness and the parallel combination of the two springs provides the dynamic stiffness. At low frequencies, the apparatus acts like a simple spring having the stiffness of the first spring, while at high frequencies, it has a stiffness equal to the first and second springs in parallel. In the mid-frequency region, the stiffness increases and damping is present.

There are practical limits to the ratio of dynamic to static stiffness. The static stiffness is limited at the low end by the need for the apparatus to support the static load of the structure. The second spring cannot be made arbitrarily large because the apparatus becomes too large and heavy. In normal operation, the ratio is made as large as weight, size and other practical constraints will allow and the damping constant is selected to center the damping frequency range on the frequency or frequencies to be damped. Typically this is done by changing the damping fluid to one having a desired viscosity. This is a time consuming process which usually can only be performed properly in a factory setting.

Viscous damping and isolation apparatus are used in a wide variety of structures which have varying and sometimes unpredictable natural frequencies. Therefore, it is desirable to have the capability to readily adjust or tune the apparatus to the optimum damping frequency after it has been installed. The apparatus as described above, do not readily allow for such adjustment; therefore, a need is apparent for a readily adjustable damping and isolation system which does not compromise other characteristics of the system.

A damping apparatus according to the preamble of claim 1 is described in FR-A 642 711.

The invention as characterized in claim 1 discloses a readily adjustable damping and isolation apparatus providing a range of adjustment. Details of preferred embodiments are described in the dependent claims. The adjustable damper and isolation apparatus includes a first compliant fluid chamber and a second compliant fluid chamber. The first and second compliant fluid chambers are connected by a damping path that has an adjustable resistance to fluid flow. The apparatus further includes a device for adjusting the adjustable resistance to fluid flow.

According to an embodiment of the invention, the adjustable damper and isolation apparatus includes a damper housing having a channel coaxially positioned about an axis therethrough from a first end of the damper housing to a second end of the damper housing. A first compliant fluid chamber is formed at the first end of the damper housing and a second compliant fluid chamber is formed at the second end of the damper housing. A moveable damping adjustment member is positioned coaxially within the channel for forming a damping path between the moveable damping adjustment member and the damper housing to connect the first and second compliant fluid chambers. The position of the moveable damping adjustment member is adjusted within the channel to provide desired resistance to fluid flow through the damping path.

In another embodiment of the invention, the channel of the moveable damping adjustment member is tapered at a predetermined angle from the first end of the damper housing to the second end of the damper housing. A tapered portion of the moveable damping adjustment member is also tapered at substantially the predetermined angle.

In other embodiments of the invention, the adjustable resistance to fluid flow can be remotely adjusted and the adjustable damper and isolation apparatus is hermetically sealed. Also, the elements of the adjustable damper and isolation apparatus are coaxially aligned and symmetric about an axis of the apparatus and the adjustable resistance to flow is adjustable in a range of adjustment of about 100 to 1 with respect to a damping coefficient of the apparatus.

A method of adjusting a damping constant of a damper is also described. The method includes providing a first compliant fluid chamber for the damper and a second compliant fluid chamber for the damper. A tapered member is moved and positioned within a tapered sleeve to form a damping path between the first compliant fluid chamber and the second compliant fluid chamber. A position within the tapered sleeve is selected and the tapered member is locked within the tapered sleeve at the position to center a damping frequency range for the adjustable damping and isolation apparatus on a particular frequency to be damped.

The invention will now be explained with reference to embodiments shown in the drawings. Therein:

Figure 1A shows a prior art damping and isolation apparatus and Figure 1B is a mechanical schematic thereof.

Figure 2 is an adjustable damper and isolation apparatus in accordance with the present invention.

Figures 3A and 3B are schematic representations of the present invention.

Figure 4A shows an exploded view of unassembled elements of the damping and isolation apparatus of Figure 2, wherein some of the elements are shown in cross-sectional view.

Figure 4B, 4C and 4D show a top view of a guide shown in a cross-sectional view in Figure 4A, a top view of an adjuster sleeve shown in a cross-sectional view in Figure 4A, and a bottom view of an adjuster cone shown in a cross-sectional view in Figure 4A, respectively.

Figure 5A includes cross-sectional views of unassembled housing elements of the damping and isolation apparatus of Figure 2.

Figure 5B, 5C and 5D are a top view of a diaphragm clamp shown in a cross-sectional view in Figure 5A, a top view of an adjuster nut shown in cross-sectional view in Figure 5A and a top view of a housing shown in cross-sectional view in Figure 5A, respectively.

Figure 6 includes an alternative embodiment of a damping and isolation apparatus in accordance with the present invention.

As described with regard to the mechanical schematic shown in Figure 1B in the Background of the Invention section herein, a three parameter viscous damping and isolation apparatus includes a stiffness represented by spring constant $K_A$ and implemented with an outer tube of the damping and isolation apparatus, shown in Figure 1A, a second stiffness represented by spring constant $K_B$ and implemented with an inner tube of the damping and isolation apparatus of Figure 1A, and a damper represented by the damping constant $C_A$ in series with the spring $K_B$. At low frequencies, the three parameter damping apparatus acts like a simple spring having a stiffness of $K_A$ while at high frequencies, it has the stiffness equal to $K_A$ and $K_B$ in parallel. In the mid-frequency range the stiffness increases and damping is present.

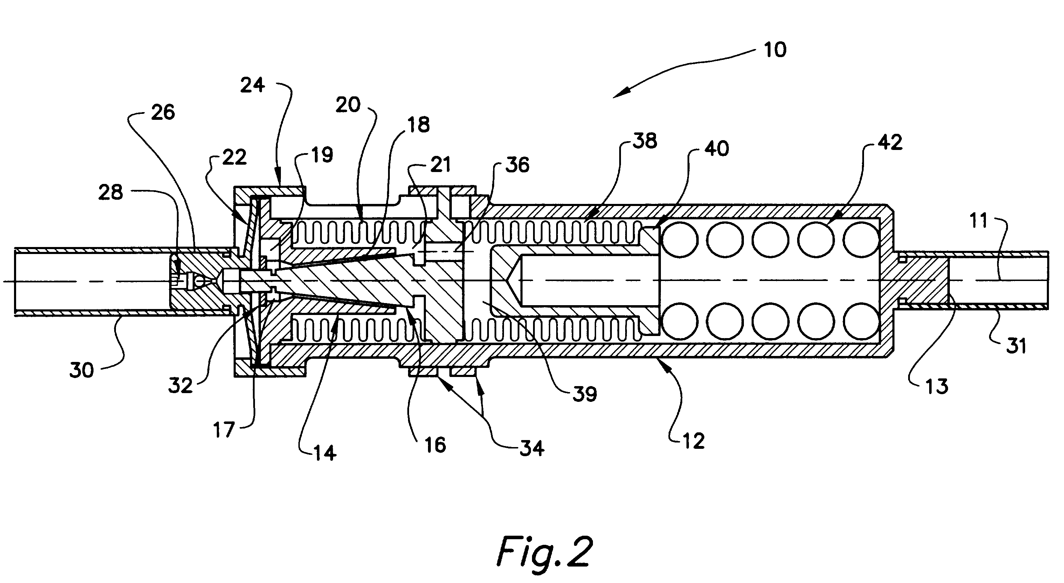

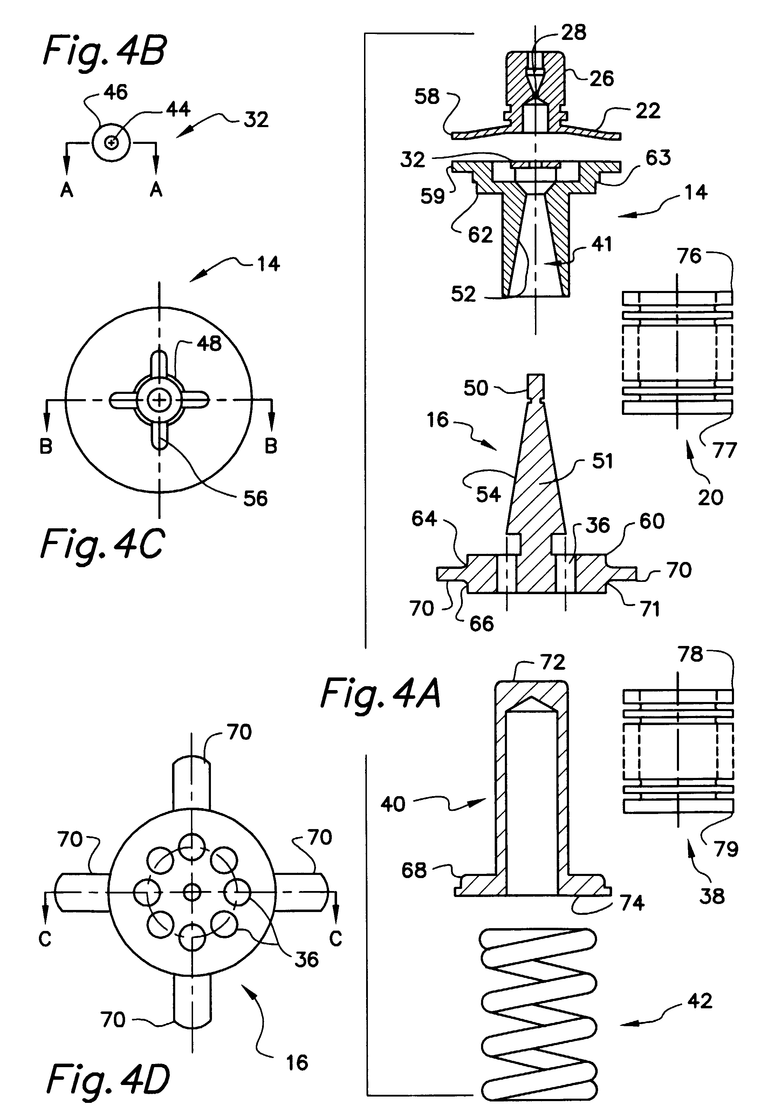

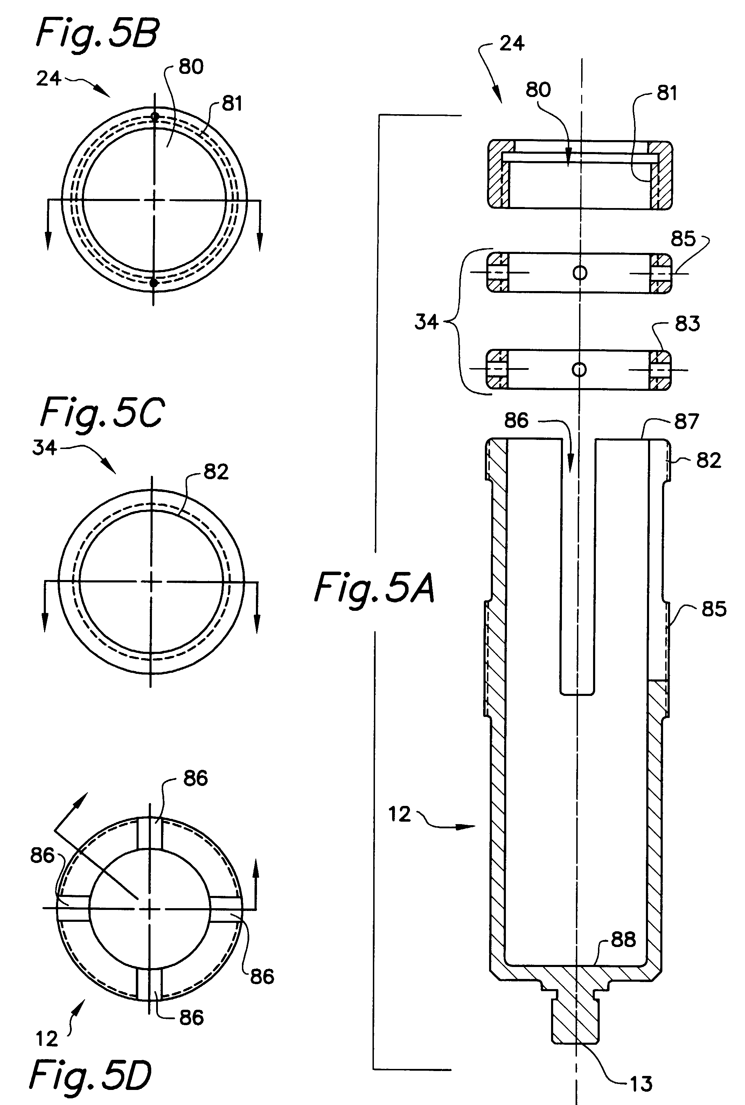

An adjustable damping and isolation apparatus 10 shall be described with reference to Figures 2-5 that permits the damping constant $C_A$ to be selected to center the damping frequency range of the apparatus 10 on the frequency or frequencies to be damped. The adjustable damper and isolation apparatus 10 includes a housing 12 to be further described in detail below with reference to Figures 5A-5D. The housing 12 surrounds the unassembled damper and isolator elements shown in Figure 4A-4D also to be further described in detail below.

The adjustable damper and isolation apparatus 10 includes, within the housing 12, an adjuster sleeve 14 used as a damper housing to form a damping annulus 18 when an adjuster cone 16, a movable adjustment member, is positioned within a channel 41, Figure 4A, therethrough. The adjuster cone 16 is coupled to housing 12 by adjuster nuts 34 which allow adjuster cone 16 to be moved within channel 41 of adjuster sleeve 14 along an axis 11 thereof over a range of predetermined distance. The adjuster cone 16 is guided along the axis 11 of the adjustable damper and isolation apparatus 10 and through the channel coaxially positioned in adjuster sleeve 14 by adjuster cone guide 32. At one end of the adjuster sleeve 14, an upper fluid chamber 19 is formed by a diaphragm 22 coupled to adjuster sleeve 14 via diaphragm clamp 24. The diaphragm 22 is integral with a piston 26 having a fillport 28 for allowing a fluid 17, preferably silicon fluid available from Dow Corning, to be filled within the adjustable damping and isolation apparatus 10. The piston 26 is attached to end tube 30 which has an overall length and threaded end for adaptation to a structure, such as a truss structure.

An adjuster fluid volume 21 is formed at a second end of the adjuster sleeve 14 by an adjuster bellows 20 that is connected between the adjuster sleeve 14 and adjuster cone 16. The adjuster bellows 20 allows for the movement of the adjuster cone 16 within the coaxial channel 41 of the adjuster sleeve 14 via movement of adjuster nuts 34 coupled to housing 12.

A temperature compensation fluid volume 39 is formed coaxially along axis 11 by temperature compensation bellows 38 that is connected between adjuster cone 16 and a temperature compensation plug 40. The temperature compensation plug 40 is preloaded by compression of the preloaded spring 42 between temperature compensation plug 40 and housing 12. Housing 12 further includes a housing end 13 which is coupled to an end tube 31 having a threaded end for adaptation to a structure, such as a truss structure.

In operation, when the adjustable damping and isolation apparatus 10 is subjected to an axial compressive load, the diaphragm 22 flexes and fluid 17 is pumped or forced through the damping annulus 18 into the adjuster fluid volume 21 and temperature compensation fluid volume 39. The temperature compensation bellows 38 is preloaded by spring 42 so that the fluid 17 will similarly flow in the reverse direction when the compressive load is removed or if a tensile load is applied.

The static stiffness ofthe adjustable damping and isolation apparatus 10 is predominately due to the axial flexing of the diaphragm 22. The damping of the apparatus 10 is due to the viscous shear of the fluid flowing through the damping annulus 18 and the series stiffness that adds to the static stiffness to form the dynamic stiffness of the adjustable damping and isolation apparatus 10 is due to the ballooning of the diaphragm 22 under fluid pressure and the compressibility of the fluid 17 itself. Such stiffness effects are known to one skilled in the art and can be calculated with reasonable accuracy.

Prior art damping and isolation apparatuses have employed simple orifices or cylindrical annuluses for the fluid flow through a damping annulus to provide a viscous fluid shear and a damping effect. The adjustable damping and isolation apparatus 10 of the present invention includes the adjuster sleeve 14 and the adjuster cone 16 inserted in the channel 41 of the adjuster sleeve 14 to form a tapered annulus. The taper is gradual enough that the flow remains viscous and laminar along its entire predetermined length, but it is large enough that an appreciable change in the diametral clearance across the annulus will occur as the adjuster cone 16 is moved axially within the channel of the adjuster sleeve 14. Since the damping constant of the adjustable damping and isolation apparatus 10 is related to the fourth power of the clearance between the adjuster cone 16 and adjuster sleeve 14, an axial adjustment of 0.200 inches can provide a desired 100 to 1 change in damping constant or coefficient.

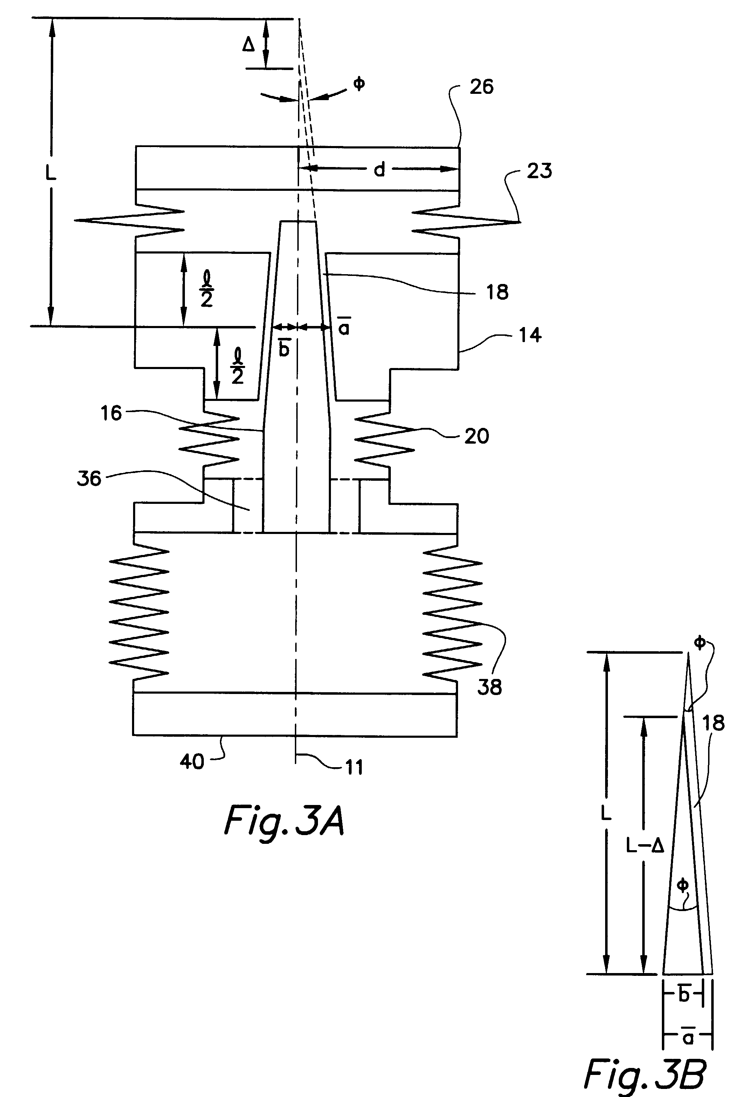

An analysis for calculating the damping constant of the adjustable damping and isolation apparatus 10 using a tapered shaped annulus 18 is shown below and described with reference to Figures 3A and 3B. The calculation is represented as follows:

Origin=1

aavg=0,2      outside radius of annulus at its midpoint

1=0,5      overall length of annulus

$\phi=7,5 \cdot \dfrac{\pi}{180}$      annulus wedge angle

$\mu=1,4 \cdot 10^{-4}$      viscosity (equals 1000 cs)

d=0,75      piston radius

i=1..30

$$\Delta_i = i \cdot 0,01 \qquad \text{axial displacement of wedge from contact point}$$

$$j = 1..3$$

$$a_j = aavg + (j-2) \cdot \frac{1}{2} \cdot \tan(\phi) \qquad \text{annulus outside radii at inlet, midpoint and outlet}$$

$$b_{(i,j)} = a_j - \Delta_i \cdot \tan(\phi) \qquad \text{annulus inside radii at inlet, midpoint and outlet}$$

$$C(i,j) = \frac{8 \cdot \pi \cdot \mu \cdot 1 \cdot d^4}{(a_j)^4 - (b_{i,j})^4 - \dfrac{[(a_j)^2 - (b_{i,j})^2]^2}{\ln \dfrac{a_j}{b_{i,j}}}} \qquad \text{coefficient of damping}$$

$$c_i = a_2 - b_{i,2} \qquad \text{annulus radial clearance}$$

In accordance with the calculations for the above embodiment and as shown in Figure 3A and 3B, by moving the adjuster cone 16 along axis 11 through the channel of adjuster sleeve 14 and changing the diametral clearance across the damping annulus 18, a change in damping constant of over 100 to 1 can be achieved. With this continuous range of damping constants being possible, a damping annulus can be selected to center the damping frequency range for the adjustable damping and isolation system 10 on the frequency or frequencies to be damped by the apparatus 10. In other words, the damping and isolation apparatus 10 can be tuned for a particular external frequency to be damped. For example, in one embodiment, the frequency of maximum damping can be adjusted from 0,1 to 10Hz with a resolution of adjustment of 0.1Hz. Such adjustment is possible with a taper angle $\phi$ equal to 7.5°.

The unassembled damping and isolation elements of adjustable damper and isolation apparatus 10 are shown in Figures 4A-4D and Figures 5A-5D and shall be further described in detail. The unassembled damper and isolation elements as shown in Figure 4A include adjuster cone 16, adjuster sleeve 14, diaphragm 22 which is integral with piston 26, temperature compensation plug 40, preload spring 42, adjuster bellows 20 and temperature compensation bellows 38.

Adjuster sleeve 14 includes tapered channel 41 coaxially positioned therein and extending from a smaller diameter at a first end of the sleeve 14 to a larger diameter at a second end of the sleeve 14. The adjuster sleeve 14, as shown in Figure 4A, is a cross-sectional view taken at line BB of Figure 4C. The adjuster sleeve 14 includes channels 56 extending from the tapered channel 41 at the smaller diameter end of the sleeve 14. Also at the smaller diameter end of the tapered channel 41, a guide lip 48 is positioned for receiving adjuster cone guide 32 thereon.

Adjuster cone guide 32 is shown in Figure 4B and includes a center 44 sized to accept guide mating member 50 of adjuster cone 16. Adjuster cone guide 32 also includes an outer surface 46 for contact with guide lip 48 of adjuster sleeve 14. The adjuster cone guide 32 is shown in cross-sectional view in Figure 4A at line AA of Figure 4B. The adjuster cone guide 32 provides guidance as adjuster cone 16 is moved along axis 11 within channel 41 preventing contact of outer surface 54 of adjuster cone 16 with inner surface 52 of adjuster sleeve 14.

Adjuster cone 16 includes guide mating member 50, as described above, tapered portion 51 and base 60. Tapered portion 51 is tapered at substantially the same angle as tapered channel 41 from a smaller diameter end to a larger diameter end. The taper is gradual enough that the flow remains viscous and laminar but is large enough such that an appreciable change in diametral clearance across the annulus will occur as the adjuster cone 16, and of course the tapered portion 51 thereof, are moved axially along axis 11 within tapered channel 41. The angles of taper of both tapered channel 41 and tapered portion 51 are substantially equal to facilitate such laminar flow by keeping the diametral clearance across the annulus equal along the entire length of the annulus.

The base 60 of adjuster cone 16 which extends radially from the tapered portion 51 includes fluid paths 36 equally spaced at a predetermined distance from axis 11. The fluid paths 36 allow fluid to flow from adjuster fluid volume 21 to temperature compensation fluid volume 39, Figure 2. The adjuster cone 16 of Figure 4A is shown in cross-sectional view at Line CC of Figure 4D.

The base 60 includes four extensions 70 extending radially therefrom and equally spaced thereabout. The extensions 70 are sized to mate with extension mating slots 86 of housing 12 as shall be explained in further detail below with reference to Figure 5A and Figure 5D.

Adjuster bellows 20 connects adjuster sleeve 14 with adjuster cone 16 to form adjuster fluid volume 21. Adjuster bellows 20 includes end section 76 sized to mate with bellows mating surface 62 of adjuster sleeve 14 and bellows section 77 is sized to mate with bellows mating surface 64 of base 60 of adjuster cone 16. The adjuster bellows 20 as well as the other bellows mentioned herein are made of a .0001 lamination of copper between equal thicknesses of sulfur free nickel; other appropriate materials may also be utilized. The adjuster bellows 20 allow for movement of the tapered portion 51 of adjuster cone 16 within tapered channel 41 of adjuster sleeve 14 while maintaining a hermetic seal to prevent fluid loss from adjuster fluid volume 21.

Temperature compensation bellows 38 connects adjuster cone 16 with temperature compensation plug 40 to form temperature compensation fluid volume 39. Temperature compensation bellows 38 includes bellows section 78 sized for mating with mating surface 66 of adjuster cone 16 and bellows section 79 is sized for mating with mating surface 68 of temperature compensation plug 40. During operation of the adjustable damping and isolation apparatus 10, when the apparatus is subjected to an axial load, fluid is forced through the damping annulus 18 and through temperature compensation fluid paths 36 into temperature compensation fluid volume 39. The temperature compensation fluid paths 36 have a resistance to flow which is much less than the resistance to flow of damping annulus 18 so that its flow impedance does not affect the damping constant of the apparatus 10. The temperature compensation bellows 38 must accommodate fluid 17 expanded over temperature and the fluid forced out of the adjuster fluid volume 21 during damping. The temperature compensation bellows 38 is preloaded by spring 42 to maintain adequate fluid pressure over an entire temperature range so as to avoid cavitation in the apparatus 10.

In addition, the unassembled damper and isolation elements include diaphragm 22 which is coupled to adjuster sleeve 14 by diaphragm clamp 24 and housing 12 as will be explained in further detail below. Diaphragm 22 includes an integral piston 26 for connection to end tube 30, Figure 2, with a fluid fillport 28 for filling the damper and isolation apparatus 10 with fluid 17. The diaphragm 22 is a single titanium diaphragm of about .06 inch thickness which provides a static stiffness of about 80,000 lbs. per inch. In order to avoid buckling with the diaphragm 22, it is formed into a slight coned shape such that the diaphragm 22 does not deflect through its flat position. The diaphragm 22 is coupled to the adjuster sleeve 14 to form upper fluid chamber 19.

As an alternative to the diaphragm 22, a multiple diaphragm, a bellows or a welded bellows could also be utilized. Such a bellows 23 which performs substantially equivalent to the diaphragm 22 is shown in Figure 3A connecting piston 26 to adjuster sleeve 14. Bellows 23 as utilized for assembly of the adjustable damping and isolation apparatus 10 are available from Servometer Corp., Cedar Grove, New Jersey.

With the elements of Figure 4A assembled, they are inserted into housing 12 of Figure 5A. One adjuster nut 34 is kept on each side of extensions 70 of base 60 of adjuster cone 16. The extensions 70 are inserted into extension mating slots 86, Figure 5D. The adjuster nuts 34 include threads 83 matching a threaded section 85 of housing 12. End 87 of housing 12 mates with housing mating surface 63 of adjuster sleeve 14 and the housing 12 also is sized for contact with mating surface 71 of adjuster cone 16. With spring 42 compressed against lower circular surface 74 of temperature compensation plug 40 and lower surface 88 of housing 12, and with diaphragm 22 positioned adjacent to adjuster sleeve 14, diaphragm clamp 24 which includes a threaded section 81 matching the threaded section 82 of housing 12 is tightened such that the upper fluid volume 19 is sealed.

The apparatus 10 is hermetically sealed and axially symmetric about axis 11. Hermetic sealing is particularly important to aircraft and spacecraft applications to prevent fluid loss. No sliding or rubbing seals are utilized which might create a Coulomb friction or stiction at low frequencies. Axial symmetry of the damping and isolation apparatus 10 prevents the apparatus 10 at high frequencies from moving out of plane which may result in resonance peaks in transmissibility.

With the housing elements of Figure 5A being shown in cross-section, i.e., diaphragm clamp 24 being a cross-sectional view taken at line DD of Figure 5B, adjuster nuts 34 being a cross-sectional view of Figure 5C taken at line EE and housing 12 being a cross-sectional view of Figure 5D at line FF, adjustment of the damping and isolation apparatus 10 is described. As shown in Figure 2, the adjuster cone 16 is positioned manually by loosening the adjuster nuts 34, sliding the adjuster cone 16 to a desired position, then retightening adjuster nuts 34. Adjuster nuts 34 include tightening holes 85 for insertion of appropriate hardware to lock the nuts in place. The adjuster bellows 20 accommodates this axial motion of the adjuster cone without compromising hermetic seal of the apparatus 10.

One design selected for apparatus 10 provides a damping constant that varies from 300.000 to 26.000 as the diametral clearance of the tapered damping annulus 18 changes from 0,05 to 0,25 inches. The design requires an outside diameter at midpoint of .40 inches, a length of one inch, a taper angle of 7,5 degrees and a fluid viscosity of 100.000 centistokes. One in the art will readily recognize that such a design is only exemplary and that depending upon the application other designs can be calculated.

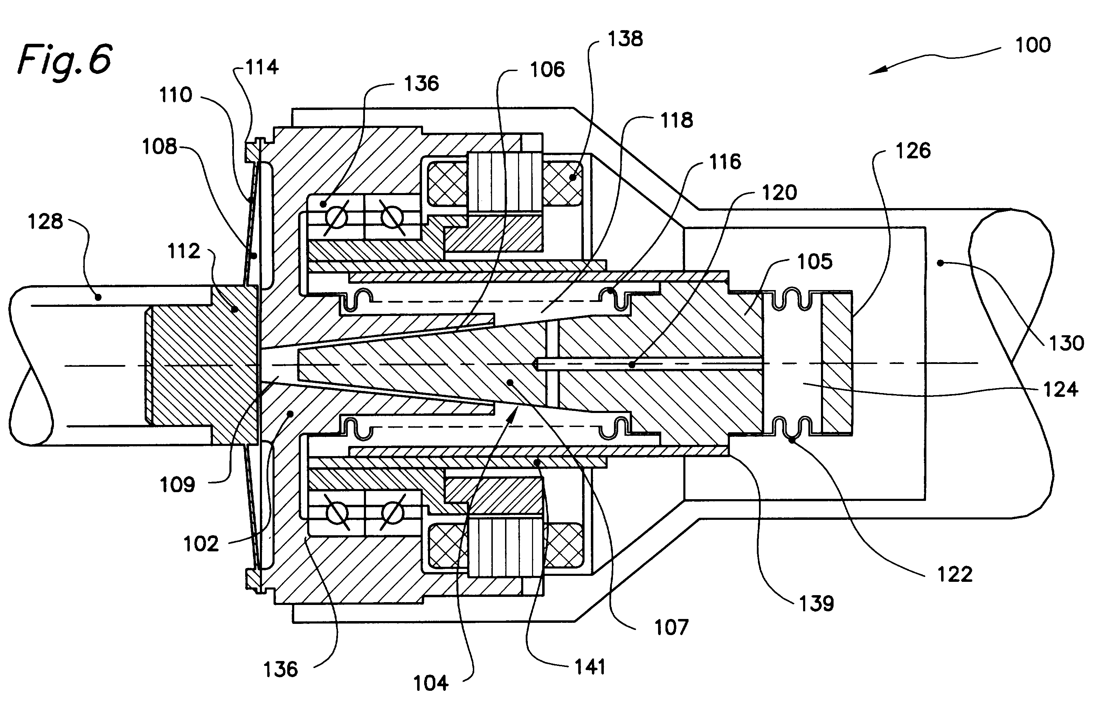

An alternative embodiment of a damping and isolation apparatus 100 in accordance with the present invention, shall be described with reference to Figure 6. The damping and isolation apparatus 100 includes similar elements to the adjustable damping and isolation apparatus 10 while allowing for remote adjustment of the apparatus 100 by adjustment of the damping of the apparatus with a motor actuation system that is external to the damper.

The apparatus 100 includes adjuster sleeve 102 which has a channel for movement of adjuster cone 104 therein. Adjuster sleeve 102 and adjuster cone 104 are connected by adjuster bellows 116 to form adjuster fluid chamber 118. A diaphragm 110 is coupled to adjuster sleeve 102 by diaphragm clamp 114 to form upper fluid chamber 109 having fluid 108 therein. The diaphragm is coupled to piston 112 which has a tube 128 attached thereto of a first diameter for attachment to a structure, such as a truss structure.

The adjuster cone 104 includes a temperature compensation orifice 120. When an axial compressive load is applied to the apparatus 100, the diaphragm 110 flexes and fluid 108 is pumped through the damping annulus 106 into adjuster fluid chamber 118 and via temperature compensation orifice 120 into temperature compensation fluid chamber 124. Temperature compensation fluid chamber 124 is formed by connecting temperature compensation bellows 122 between adjuster cone 104 and seal plate 126. A tube of a second diameter 130 is also attached to adjuster sleeve 102 for adaptation to a structure, such as a truss structure.

The adjuster cone 104 also includes a base portion 105 having a first set of gear teeth 139 attached thereto. A second set of gear teeth 141 and a step motor 138 is coupled to the adjuster sleeve 102 by the duplex bearings 136. A tapered portion 107 of the adjuster cone 104 is positioned axially within a tapered channel of the adjuster sleeve 102 by energizing the step motor 138. Each time the step motor 138 is energized, it rotates 15 degrees and the rotation is converted into axial motion of the tapered portion 107 by the gear teeth 139, 141. Translational motion occurs over a range of about 0.200 inches and results in a change in damping coefficient of over about 100 to 1.

The apparatus as shown is hermetically sealed and allows adjustment of damping with a motor actuation system which is external to the sealed damper. When the motor is unenergized, the apparatus 10 remains fully operational and the damping coefficient is constant at the value last set by the step motor 138. Therefore, no power is required for normal operation and a common motor driver can be used to adjust a plurality of such apparatus sequentially.

One skilled in the art will readily recognize that any actuation system which provides axial motion of the adjuster cone 104 within the adjuster sleeve 102 is suitable in accordance with the present invention. Such actuation systems may include an electric motor, a piezo-electric inchworm motor, and a magnetostrictive inchworm motor, a piezoelectric rotation motor, or any other appropriate motor.

## Claims

1. A damper and isolation apparatus, comprising:

   a) a damper housing (14, 102);
   b) first means (22, 14; 102, 110) for forming a first compliant fluid chamber (19, 109) at a first end of said damper housing;
   c) second means (20, 14; 102, 116) for forming a second compliant fluid chamber (21, 118) at a second end of said damper housing;
   d) a channel forming a damping path (18, 106) connecting said first and second compliant fluid chambers; wherein
   e) said first complaint fluid chamber (19, 109), said second compliant fluid chamber (21, 118), and said damping path (18, 106) are coaxially aligned and symmetric about an axis (11) of said apparatus, **characterized by:**
   f) a movable damping adjuster cone (16, 104) positioned coaxially within a tapered adjusting portion (14, 102) of said housing for forming a damping path with an adjustable resistance to fluid flow between said first and second compliant fluid chambers; and
   g) means (34, 70; 105, 139, 141, 138) for adjusting the position of said moveable damping adjuster cone within said channel to provide a desired resistance to fluid flow through said damping path.

2. The apparatus according to Claim 1, **characterized in that** said channel (18, 106) is tapered at a predetermined angle from said first end of said damper housing (14, 102) to said second end of said damper housing and wherein said moveable damping adjustment member (16, 104) includes a tapered portion tapered at substantially said predetermined angle.

3. The apparatus according to Claim 1 or 2, **characterized in that** said moveable damping adjustment member (16, 104) includes a base portion (105) extending radially from said tapered portion (16, 104) for connecting said moveable damping adjustment member to said damper housing (14, 102) via said means (20, 14; 102, 116) for forming said second compliant fluid chamber (21, 118).

4. The apparatus according to Claim 1, 2 or 3, **characterized in that** said second means for forming said second compliant fluid chamber (118) includes:

a) an adjuster bellows (20, 116) coaxially positioned and connecting said damper housing (14, 102) and said base portion (105) of said moveable damping adjustment member (16, 104) to form an adjuster fluid chamber (21, 18);

b) a temperature compensation bellows (38, 122) coaxially positioned and connecting said base portion (105) of said moveable damping adjustment member and a sealing member (40, 126) to form a temperature compensation fluid chamber (39, 124); and

c) a temperature compensation path (36, 120) through said moveable damping adjustment member (104) for connecting said adjuster fluid chamber (39, 124) and said temperature compensation fluid chamber (39, 124), said temperature compensation path having a resistance to flow less than said damping path (18, 106).

5. The apparatus according to one of the preceding claims, **characterized in that** said adjustment means (102, 104) includes means (105, 139, 141, 138) for remotely adjusting said adjustable resistance to fluid flow.

6. The apparatus according to Claim 5, **characterized in that** said remote adjustment means includes a step motor (138) and means for coupling said moveable member (104) to said damper housing (102) such that when said step motor is energized said moveable damping adjustment member (104) rotates a predetermined distance and said rotation is converted into an axial motion of said moveable damping adjustment member along said axis within said channel (106) to adjust said resistance to fluid flow through said damping path.

7. The apparatus according to one of the preceding claims, **characterized in that** said adjustment means includes an outer housing (12) positioned coaxially about said damper housing (14, 102) and said moveable damping adjustment member (16, 104); and coupling means (70) for coupling said base portion (105) of said moveable damping adjustment member to said outer housing (12) to allow movement of and positioning of said tapered portion of said moveable damping adjustment member (16) at various positions within said channel along said axis.

8. The apparatus according to Claim 1, **characterized in that** said first means for forming said first compliant fluid chamber (19) includes a bellows connecting said damper housing (14) to a piston member.

9. The apparatus according to Claim 1, **characterized in that** said means for forming said first compliant fluid chamber (19) includes a diaphragm (22) coupled to said damper housing (14) and to a piston member (26).

10. The apparatus according to one of the preceding claims, **characterized in that** said adjustment means adjusts said adjustable resistance to flow such that a range of adjustment of about 100 to 1 with respect to a damping coefficient of the apparatus results therefrom.


## Patentansprüche

1. Dämpfungs- und Isoliereinrichtung mit:

a) einem Dämpfergehäuse (14, 102);

b) ersten Mitteln (22, 14; 102, 110) zum Bilden einer ersten nachgiebigen Fluidkammer (19, 109) an einem ersten Ende des Dämpfergehäuses;

c) zweiten Mitteln (20, 14; 102, 116) zum Bilden einer zweiten nachgiebigen Fluidkammer (21, 118) am zweiten Ende des Dämpfergehäuses;

d) einem einen Dämpfungskanal (18, 106) bildenden Kanal, welcher die erste und die zweite nachgiebige Fluidkammer miteinander verbindet; wobei

e) die erste nachgiebige Fluidkammer (19, 109), die zweite nachgiebige Fluidkammer (21, 118) sowie der Dämpfungskanal (18, 106) koaxial und symmetrisch um eine Achse (11) der Einrichtung angeordnet sind,

**gekennzeichnet durch** :

f) einen beweglichen Dämpfungseinstellkonus (16, 104), der koaxial innerhalb eines konischen Einstellteils (14, 102) des Gehäuses angeordnet ist, um einen Dämpfungskanal mit einstellbarem Strömungswiderstand zwischen der ersten und der zweiten nachgiebigen Fluidkammer zu bilden; und

g) Mitteln (34, 70; 105, 139, 141, 138) zum Einstellen der Position des beweglichen Dämpfungseinstellkonus innerhalb des Kanals, um einen gewünschten Strömungswiderstand durch den Dämpfungskanal zu erzeugen.

**2.** Vorrichtung nach Anspruch 1, **dadurch gekennzeichnet**, daß der Kanal (18, 106) unter einem vorgegebenen Winkel konisch sich vom ersten Ende des Dämpfergehäuses (14, 102) zu dessen zweiten Ende erstreckt und wobei das bewegliche Dämpfungseinstellglied (16, 104) einen konischen Teil hat, der praktisch unter dem genannten vorgegebenen Winkel konisch ausgebildet ist.

**3.** Vorrichtung nach Anspruch 1 oder 2, **dadurch gekennzeichnet**, daß das bewegliche Dämpfungseinstellglied (16, 104) einen Basisteil (105) aufweist, der sich radial vom konischen Teil (16, 104) aus erstreckt und der Verbindung des beweglichen Dämpfungseinstellgliedes über die genannten Mittel (20, 14; 102, 116) zur Bildung der zweiten nachgiebigen Fluidkammer (21, 118) mit dem Dämpfergehäuse (14, 102) dient.

**4.** Vorrichtung nach Anspruch 1, 2 oder 3, **dadurch gekennzeichnet**, daß die zweiten Mittel zum Bilden der zweiten nachgiebigen Fluidkammer (118) umfassen:

a) einen koaxial angeordneten Einstellbalgen (20, 116), welcher das Dämpfergehäuse (14, 102) und den Basisteil (105) des beweglichen Dämpfungseinstellgliedes (16, 104) miteinander verbindet und so eine Einstellfluidkammer (21, 18) bildet;
b) einen koaxial angeordneten Temperaturkompensationsbalgen (38, 122), welcher den Basisteil (105) des beweglichen Dämpfungseinstellgliedes mit einem Abdichtkörper (40, 126) verbindet, um eine TemperaturkompensationsFluidkammer (39, 124) zu bilden; und
c) einen Temperaturkompensationskanal (36, 120) durch das bewegliche Dämpfungseinstellglied (104) zum Verbinden der Einstellfluidkammer (39, 124) mit der Temperaturkompensationsfluidkammer (39, 124), wobei der Temperaturkompensationskanal einen Strömungswiderstand hat, der kleiner ist als der des Dämpfungskanals (18, 106).

**5.** Vorrichtung nach einem der vorangehenden Ansprüche, **dadurch gekennzeichnet**, daß die Einstellmittel (102, 104) Mittel (105, 139, 141, 138) zur Ferneinstellung des einstellbaren Strömungswiderstandes umfassen.

**6.** Vorrichtung nach Anspruch 5, **dadurch gekennzeichnet**, daß die Ferneinstellmittel einen Schrittmotor (38) sowie Mittel zum Verbinden des beweglichen Gliedes (104) mit dem Dämpfergehäuse (102) aufweisen, so daß beim Einschalten des Schrittmotors das bewegliche Dämpfungseinstellglied (104) sich um einen vorgegebenen Betrag dreht und die Drehung in eine Axialbewegung des beweglichen Dämpfungseinstellgliedes längs der Achse und innerhalb des Kanals (106) umgewandelt wird, um den Strömungswiderstand durch den Dämpfungskanal einzustellen.

**7.** Vorrichtung nach einem der vorangehenden Ansprüche, **dadurch gekennzeichnet**, daß die Einstellmittel ein äußeres Gehäuse (12) umfassen, das koaxial um das Dämpfergehäuse (14, 102) sowie das bewegliche Dämpfungseinstellglied (16, 104) angeordnet ist, sowie Kupplungsmittel (70) zum Verbinden des Basisteils (105) des beweglichen Dämpfungseinstellgliedes mit dem äußeren Gehäuse (12), um eine Bewegung und ein Positionieren des konischen Teils des beweglichen Dämpfungseinstellgliedes (16) in verschiedene Positionen innerhalb des Kanals längs der Achse zu ermöglichen.

**8.** Vorrichtung nach Anspruch 1, **dadurch gekennzeichnet**, daß die Mittel zum Bilden der ersten nachgiebigen Fluidkammer (19) einen Balgen umfassen, der das Dämpfergehäuse (14) mit einem Kolben verbindet.

**9.** Vorrichtung nach Anspruch 1, **dadurch gekennzeichnet**, daß die Mittel zum Bilden der ersten Fluidkammer (19) eine Membran (22) umfassen, welche das Dämpfergehäuse (14) mit einem Kolben (26) verbindet.

**10.** Vorrichtung nach einem der vorangehenden Ansprüche, **dadurch gekennzeichnet**, daß die Einstellmittel den einstellbaren Strömungswiderstand so einstellen, daß ein Einstellbereich von etwa 100:1 für den Dämpfungskoeffizienten der Einrichtung erzielt wird.

**Revendications**

**1.** Dispositif formant amortisseur et isolateur, comprenant :

a) un boîtier d'amortisseur (14,102);
b) des premiers moyens (22,14;102,110) pour former une première chambre élastique de fluide (19,109) à une première extrémité dudit boîtier d'amortisseur;

c) des seconds moyens (20,14;102,116) pour former une seconde chambre élastique de fluide (21,118) à une seconde extrémité dudit boîtier d'amortisseur;

d) un canal formant un trajet d'amortissement (18,106) raccordant lesdites première et seconde chambres élastiques de fluide;

dans lequel

e) ladite première chambre élastique de fluide (19, 109), ladite seconde chambre élastique de fluide (21, 118) et ledit trajet d'amortissement (18, 106) sont alignés coaxialement et sont symétriques autour d'un axe (11) dudit dispositif,

caractérisé par :

f) un cône mobile de réglage d'amortissement (16,104) positionné coaxialement dans une partie de réglage effilée en cône (14,102) dudit boîtier, pour former un trajet d'amortissement avec une résistance réglable à l'écoulement de fluide entre lesdites première et seconde chambres élastiques de fluide; et

g) des moyens (34,70; 105,139,141,138) pour régler la position dudit cône mobile de réglage d'amortissement à l'intérieur dudit canal, pour produire une résistance désirée à l'écoulement de fluide dans ledit trajet d'amortissement.

2. Dispositif selon la revendication 1, caractérisé en ce que ledit canal (18, 106) est effilé en cône suivant un angle prédéterminé depuis ladite première extrémité dudit boîtier d'amortisseur (14,102) jusqu'à ladite seconde extrémité dudit boîtier d'amortisseur, et dans lequel ledit organe mobile (16,104) de réglage de l'amortissement comprend une partie effilée en cône, qui s'effile suivant sensiblement ledit angle prédéterminé.

3. Dispositif selon la revendication 1 ou 2, caractérisé en ce que ledit organe mobile (16,104) de réglage de l'amortissement comprend une partie de base (105) qui s'étend radialement à partir de ladite partie effilée en cône (16,104) pour raccorder ledit organe mobile de réglage de l'amortissement audit boîtier d'amortisseur (14,102), par l'intermédiaire desdits moyens (20,14; 102,116) pour former ladite seconde chambre élastique de fluide (21,118).

4. Dispositif selon la revendication 1, 2 ou 3, caractérisé en ce que lesdits seconds moyens pour former ladite seconde chambre élastique de fluide (118) comprennent :

a) un soufflet de réglage (20,116) disposé coaxialement et raccordant ledit boîtier d'amortisseur (14,102) et ladite partie de base (105) dudit organe mobile (16,104) de réglage de l'amortissement, pour former une chambre de fluide de réglage (21, 18);

b) un soufflet de compensation de température (38,122) disposé coaxialement et raccordant ladite partie de base (105) dudit organe mobile de réglage de l'amortissement et un élément d'étanchéité (40,126), pour former une chambre de fluide de compensation de température (39,124); et

c) un trajet de compensation de température (36,120) formé à travers ledit organe mobile (104) de réglage de l'amortissement pour raccorder ladite chambre de fluide de réglage (39,124) et ladite chambre de fluide de compensation de température (39,124), ledit trajet de compensation de température ayant une résistance à l'écoulement plus faible que ledit trajet d'amortissement (18,106).

5. Dispositif selon l'une des revendications précédentes, caractérisé en ce que lesdits moyens de réglage (102,104) comprennent des moyens (105,139,141,138) pour régler à distance ladite résistance réglable à l'écoulement de fluide.

6. Dispositif selon la revendication 5, caractérisé en ce que lesdits moyens de réglage à distance comprennent un moteur pas-à-pas (138) et des moyens pour coupler ledit organe mobile (104) audit boîtier d'amortisseur (102) de telle sorte que, lorsque ledit moteur pas-à-pas est mis sous tension, ledit organe mobile (104) de réglage de l'amortissement tourne sur une distance prédéterminée et ladite rotation est convertie en un mouvement axial dudit organe mobile de réglage de l'amortissement le long dudit axe, à l'intérieur dudit canal (106), pour régler ladite résistance à l'écoulement de fluide dans ledit trajet d'amortissement.

7. Dispositif selon l'une des revendications précédentes, caractérisé en ce que lesdits moyens de réglage comprennent un boîtier extérieur (12) disposé coaxialement autour dudit boîtier d'amortisseur (14,102) et dudit organe mobile (16,104) de réglage de l'amortissement; et des moyens de couplage (70) pour coupler ladite partie de base (105) dudit organe mobile de réglage de l'amortissement audit boîtier extérieur (12) pour permettre un déplacement et un positionnement de ladite partie effilée en cône dudit organe mobile (16) de réglage de l'amortissement dans différentes positions à l'intérieur dudit canal, le long dudit axe.

8. Dispositif selon la revendication 1, caractérisé en ce que lesdits premiers moyens pour former ladite première chambre élastique de fluide (19) comprennent un soufflet raccordant ledit boîtier d'amortisseur (14) à un élément formant piston.

9. Dispositif selon la revendication 1, caractérisé en ce que lesdits moyens pour former ladite première chambre élastique de fluide (19) comprennent un diaphragme (22) couplé audit boîtier d'amortisseur (14) et à un élément formant piston (26).

10. Dispositif selon l'une des revendications précédentes, caractérisé en ce que lesdits moyens de réglage règlent ladite résistance réglable à l'écoulement, afin qu'il en résulte une plage de réglages d'environ 100 à 1 par rapport à un coefficient d'amortissement du dispositif.

200

210    202    212

208    206    204

*Fig.1A*

*Fig.1B*

*Fig.2*

Fig.3A

Fig.3B

Fig. 4B

Fig. 4C

Fig. 4A

Fig. 4D

Fig.5B

Fig.5C

Fig.5D

Fig.5A

Fig.6

EP 0 623 764 B1